# FASCICULE DE BREVET EUROPEEN

(11) **EP 3 233 346 B1**
(45) Date de publication et mention de la délivrance du brevet: **18.07.2018**
(21) Numéro de dépôt: 15828747.4
(22) Date de dépôt: 17.12.2015
(51) Int. Cl.: B23K 1/00, B23K 3/08, B23P 15/24, B29C 43/32, B23K 101/02

(54) **OUTILLAGE ADAPTE POUR LE BRASAGE D'UN ENSEMBLE DE PIECES METALLIQUES**
WERKZEUG ZUM HARTLÖTEN VON METALLTEILEN
TOOL SUITABLE FOR BRAZING A SET OF METAL PARTS

(30) Priorité: 17.12.2014 FR 1462656
(43) Date de publication de la demande: 25.10.2017
(73) Titulaire: Safran Nacelles, 76700 Gonfreville-l'Orcher (FR)
(72) Inventeur: BIENVENU, Philippe, 76700 Gonfreville l'Orcher (FR); RIVOAL, Jean-Claude, 76700 Gonfreville l'Orcher (FR); THERON, Guillaume, 76700 Gonfreville l'Orcher (FR)
(74) Mandataire: Gaillarde, Frédéric F. Ch.
(86) Numéro de dépôt international: PCT/FR2015/053599
(87) Numéro de publication internationale: WO 2016/097634

(56) Documents cités:
- JP-A- H0 230 680
- US-A- 3 768 985
- US-A- 4 089 456
- US-A- 4 429 824
- US-B1- 6 758 388

## Description

La présente invention se rapporte à un outillage adapté pour le brasage d'un ensemble de pièces métalliques conformément au préambule de la revendication 1 (voir, par exemple, US4 089 456 A). Un tel outillage de brasage trouve notamment une application dans le domaine de l'aéronautique, et plus particulièrement pour la fabrication de panneaux composites présentant une structure sandwich formé par une âme centrale présentant une structure à âme alvéolaire du type nid d'abeille prise en sandwich entre deux peaux.

Ces panneaux composites peuvent être également des panneaux d'atténuation acoustique prévus pour réduire les émissions de bruit des turboréacteurs, ces panneaux présentant en général une structure sandwich comprenant :
- une peau perforée, perméable à l'air, externe (orientée vers la source du bruit), dite « résistive » ou « acoustique », dont le rôle est de dissiper l'énergie acoustique,
- une structure à âme alvéolaire du type nid d'abeille et,
- une peau interne formée par une peau pleine (opposée à la source du bruit), dite structurante.

Dans certains cas, les panneaux composites doivent être conçus pour être installés en zone chaude de nacelle de turboréacteur d'aéronef, et notamment dans la partie aval de cette nacelle par laquelle sont expulsés des gaz d'échappement.

L'utilisation de tels panneaux composites est généralement structurelle et, lorsqu'il s'agit de panneaux d'atténuation acoustique dans cette zone d'échappement, cela permet aussi de réduire sensiblement les émissions sonores situées dans la plage des hautes fréquences.

Pour les applications particulières à haute température, on utilise en général des panneaux composites dont les peaux sont formées par une tôle métallique et la structure à âme alvéolaire est également métallique.

La structure à âme alvéolaire peut être alors reliée par brasage aux tôles métalliques.

Par définition, le brasage est une méthode d'assemblage de deux éléments à l'aide d'un métal d'apport dont une température de fusion inférieure à celle du métal de base des éléments. En portant le métal d'apport à sa température de fusion, celui-ci se liquéfie et mouille le métal de base avec lequel il est en contact puis diffuse à l'intérieur de ce dernier. Ensuite, en refroidissant l'assemblage, le métal d'apport se solidifie et assure la liaison entre les différents éléments en contact.

De telles opérations d'assemblage des panneaux composites sont délicates dans la mesure où il existe un risque que les qualités structurales du panneau, et éventuellement acoustiques, soient affectées par ces opérations : par exemple mauvaise tenue mécanique du panneau, voire perte d'absorption acoustique du panneau s'il s'agit d'un panneau d'atténuation acoustique.

Un mauvais positionnement relatif des éléments constitutifs du panneau après brasage peut avoir un impact sur ces qualités structurales voir acoustique du panneau composite.

Il est ainsi nécessaire de pouvoir contrôler au mieux le positionnement relatif des pièces intervenant lors du brasage et la brasure, à savoir le contact entre les éléments brasés.

Par ailleurs, les opérations d'assemblage peuvent affecter les propriétés métallurgiques du panneau traité et ont une incidence sur les propriétés de surface de ce dernier, ce qui peut diminuer leurs performances aérodynamiques.

On connaît déjà des dispositifs d'assemblage de pièces à braser dans lesquels on exerce sur les pièces à braser des efforts de contrainte pour assurer une pression de contact suffisante entre les pièces et compenser les dilatations de ces dernières.

Ces efforts tendent à éviter les déformations des pièces au cours du brasage et à les maintenir dans leur forme et leur positionnement relatif.

Ces déformations, si elles ne sont pas maîtrisées, génèrent des défauts de brasage comme une qualité médiocre des joints de brasure ou une absence locale de joint.

Un dispositif connu propose d'utiliser des tirants pour appliquer une pression mécanique sur les éléments à braser, lors du brasage.

Toutefois, l'un des inconvénients d'un tel dispositif est que, lors de l'étape de refroidissement, et du fait des différents matériaux employés, des conflits géométriques s'opèrent tendant à déformer les pièces à braser.

Pour limiter à la fois ces conflits géométriques lors de l'étape de refroidissement, et les frottements entre l'outillage et les pièces à braser du fait des dilatations différentes de ces matériaux qui les constituent, il est connu d'utiliser, pour enserrer les pièces à braser, un outillage formé en un matériau présentant un coefficient de dilatation proche de celui du matériau des pièces à braser.

Dans le cas par exemple où les pièces à braser sont en titane, de coefficient de dilatation égal à 10,3.10⁻⁶ K⁻¹ et destiné à former un panneau composite, il est connu d'utiliser des outillages en béton réfractaire de coefficient de dilatation égale à 8,1.10⁻⁶ K⁻¹ du fait de son coefficient de dilatation proche de celui du titane.

Toutefois l'utilisation de béton réfractaire dans ce contexte présente de nombreux inconvénients. Notamment, ce matériau présente une inertie thermique très élevée qui génère des temps de brasage trop long, ne supporte pas des vitesses de chauffe et de refroidissement supérieures à 2,5 °C/mm au risque de fissurer et prend l'humidité facilement ce qui n'est pas compatible avec le besoin de faire le vide dans des fours à braser.

Par ailleurs il est très difficile d'obtenir une température homogène avec un outillage en béton réfractaire, ce qui nécessite l'utilisation d'un dispositif supplémentaire d'homogénéisation de la température.

Une autre problématique liée à l'outillage adapté pour le brasage d'un panneau composite est celui de la résistance à la température. En effet, plus le panneau composite obtenu après le brasage doit résister à des contraintes thermiques importantes, comme c'est le cas en particulier pour des applications sur des nacelles de turboréacteurs d'aéronefs, et plus la température de brasage doit être élevée.

Les matériaux pouvant former un outillage adapté pour le brasage d'un tel ensemble de pièces, par exemple à une température de brasage de 1000°C, sont généralement couteux, présentent une résistance à un nombre de cycles réduits et génèrent des temps de brasage trop long du fait de leur inertie thermique.

Le but de l'invention est de proposer un outillage permettant de mettre en oeuvre un brasage affranchi de tout ou parti des inconvénients précités et notamment de proposer un outillage simple qui permette d'assurer un brasage de qualité, plus rapide, moins couteux, et compatible avec les contraintes liées à une utilisation des pièces ainsi assemblées dans une nacelle de turboréacteur pour un aéronef.

À cet effet, la présente invention a pour objet un outillage adapté pour le brasage d'un ensemble de pièces métalliques tel que défini dans la revendication 1. Grâce à un tel outillage, la pression mécanique exercée par les moyens d'appui des premier et deuxième éléments de moule est assurée par la dilatation des premier et deuxième matériaux lors de l'augmentation de la température dans le four à braser, ceci jusqu'à la température de brasage.

Les premier et deuxième matériaux présentant un coefficient de dilatation différent de celui du matériau de l'ensemble de pièces à braser, il devient alors possible de s'affranchir du coefficient de dilatation du matériau à braser, comme celui du titane par exemple.

Le choix de tels matériaux, résistant à des températures de brasage importantes, par exemple autour de 1000°C, devient plus vaste et non plus borné à un nombre limité de matériaux présentant tout ou partie des inconvénients précités.

Par ailleurs, du fait, d'une part, que le premier, respectivement le deuxième, matériau présente un coefficient de dilatation supérieur, respectivement inférieur, à celui du matériau de l'ensemble de pièces, et que, d'autre part, les premier et deuxième matériaux sont adaptés pour que leur dilatation lors du brasage assure la mise sous contrainte de l'ensemble de pièce entre les moyens d'appui des premier et deuxième éléments de moule, il en résulte que, lors de l'étape de refroidissement, les contraintes mécaniques exercées par les moyens d'appui sur les pièces assemblées par le brasage vont diminuer progressivement.

Ainsi, au fur et à mesure que la température diminue, l'ensemble de pièces brasées est libre de refroidir et de se rétracter puisque les contraintes exercées par les moyens d'appui sont réduites de façon concomitante. Conformément à l'invention, le moyen d'appui du premier élément de moule est maintenu par des premiers tirants formés par le premier matériau et le moyen d'appui du deuxième élément de moule est maintenu par des deuxièmes tirants formés par le deuxième matériau.

Dans ce cas, et avantageusement, le premier élément de moule comprend deux moyens d'appui fixés chacun à des extrémités opposées des premiers tirants associés et le deuxième élément de moule comprend deux moyens d'appui fixés chacun à des extrémités opposées des deuxièmes tirants associés, le deuxième élément de moule délimitant un espace intérieur à l'intérieur duquel est placé le premier élément de moule de sorte que chacun des moyens d'appui du premier élément de moule est en regard avec un des moyens d'appui du deuxième élément de moule.

Une telle configuration permet en particulier de pouvoir braser deux ensembles de pièces en même temps avec un même outillage, ceci sans augmenter le temps de chauffe et de refroidissement du brasage. Conformément à l'invention, les premier et deuxième moyens d'appui sont disposés globalement verticalement de sorte à ce que l'ensemble de pièces métalliques soit enserré, à la température de brasage, verticalement.

Dans cette configuration, les contraintes exercées par les moyens d'appui sont encore limitées puisque l'action du poids de l'ensemble de pièces sur les moyens d'appui est limitée, voire supprimée. En effet, dans le cas contraire où les premier et deuxième moyens d'appui seraient disposés globalement horizontalement de sorte à ce que l'ensemble de pièces métalliques soit enserré, à la température de brasage, horizontalement, la force de gravité exercée par l'ensemble de pièces sur le moyen d'appui qui le supporte implique une contrainte résultante s'exerçant sur une surface importante de l'ensemble de pièces, ce qui est à l'origine de frottements entre l'outillage et les pièces à braser lors du refroidissement.

Avec une orientation verticale, d'une part le moyen d'appui ne supporte pas l'ensemble de pièces, et d'autre part, les frottements subis par l'ensemble de pièces sont réduits de manière significative. Le panneau composite se dégage ainsi naturellement des moyens d'appui. Ceci est particulièrement avantageux pour le brasage d'éléments de pièces de grande dimension, par exemple des panneaux composite présentant une surface de plusieurs mètres carrés.

Selon une caractéristique particulière, un écartement entre les moyens d'appui des premier et deuxième éléments de moule est choisi de sorte à présenter un écartement déterminé ou une contrainte déterminée à la température de brasage.

Dans une configuration particulière, le moyen d'appui est en carbone/carbone ou en inox réfractaire ou en graphite.

Avantageusement, le premier matériau est de l'inox réfractaire.

De préférence encore, le deuxième matériau est en molybdène ou en carbone/carbone.

Selon une configuration technique particulière, l'ensemble de pièces est un panneau composite, notamment un panneau d'atténuation acoustique.

Selon un autre aspect, l'invention concerne un four à braser comprenant un outillage tel que décrit ci-avant.

Grâce à l'invention, les risques de déformations sont supprimés et les temps de chauffe et de refroidissements sont réduits. Par ailleurs, il est possible d'utiliser des températures de brasage élevées, notamment supérieures à 1000°C.

D'autres caractéristiques et avantages de la présente invention apparaîtront à la lumière de la description qui va suivre, et à l'examen des figures ci-annexées, dans lesquelles :
- la figure 1 est une représentation générale d'une nacelle de turboréacteur pour un aéronef;
- la figure 2 illustre une vue éclatée de la structure interne fixe 8 de la nacelle de la figure 1.
- les figures 3 et 4 illustrent un outillage pour le brasage d'un ensemble de pièces métalliques tel qu'un panneau composite;
- la figure 5 illustre un outillage pour le brasage d'un ensemble de pièces métalliques tel qu'un panneau composite selon un mode de réalisation de l'invention ;
- la figure 6 illustre un outillage pour le brasage d'un ensemble de pièces métalliques tel qu'un panneau composite selon un autre mode de réalisation de l'invention ;
- les figures 7a et 7b illustrent un outillage pour le brasage d'un ensemble de pièces métalliques tel qu'un panneau composite ;
- la figure 8 illustre un outillage pour le brasage d'un ensemble de pièces métalliques tel qu'un panneau composite.
Sur l'ensemble de ces figures, des références identiques ou analogues désignent des organes ou ensembles d'organes identiques ou analogues.

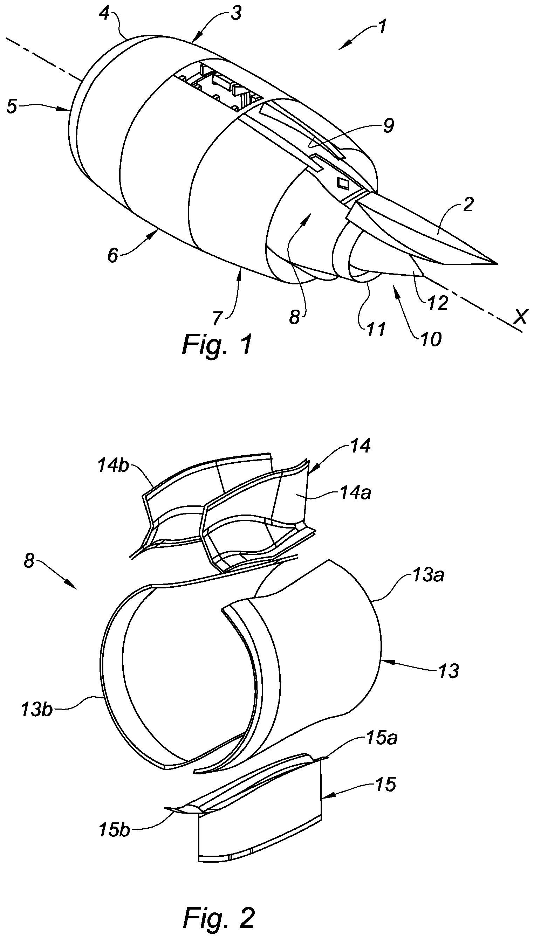

Comme représenté sur la figure 1, une nacelle 1 présente une forme sensiblement tubulaire selon un axe longitudinal X. Cette nacelle 1 est destinée à être suspendue à un pylône 2, lui-même fixé sous une aile d'un aéronef.

De façon générale, la nacelle 1 comprend une section avant ou amont 3 avec une lèvre d'entrée 4 d'air formant une entrée d'air 5, une section médiane 6 entourant une soufflante d'un turboréacteur (non représenté) et une section arrière ou aval 7. La section aval 7 comprend une structure interne fixe 8 (IFS) entourant la partie amont du turboréacteur, et une structure externe fixe (OFS) 9.

L'IFS 8 et l'OFS 9 délimitent une veine annulaire permettant le passage d'un flux d'air principal pénétrant la nacelle 1 au niveau de l'entrée d'air 5.

La nacelle 1 comporte donc des parois délimitant un espace, telle que l'entrée d'air 5 ou la veine annulaire, dans lequel le flux d'air principal pénètre, circule et est éjecté.

La nacelle 1 se termine par une tuyère d'éjection 10 comprenant un module externe 11 et un module interne 12. Les modules interne 12 et externe 11 définissent un canal d'écoulement d'un flux d'air chaud sortant du turboréacteur.

La figure 2 illustre une vue éclatée de la structure interne fixe 8 de la nacelle 1. Dans ce mode de réalisation, l'IFS 8 comprend un tonneau 13 composé de deux parois 13a, 13b de forme sensiblement semi-circulaire formant chacune un demi tonneau de sorte que, une fois assemblées, ces parois 13a, 13b forment le tonneau 13 de forme globalement cylindrique d'axe longitudinal X.

Par ailleurs, l'IFS comprend deux îlots 14, 15 pour assurer une liaison structurelle entre l'IFS et l'OFS. L'un 14, appelé îlot 12H est agencé pour être placé au dessus verticalement du tonneau, et l'autre 15 appelé îlot 6H est agencé pour être placé en dessous verticalement du tonneau. Chacun de ces îlots 14, 15 est ici composé de deux ensembles de pièces 14a, 14b 15a, 15b, chacun étant destiné à être assemblé avec l'une des parois formant demi tonneau.

Les ensembles de pièces composant notamment cet IFS 8, comme de nombreuses autres pièces de la nacelle, sont généralement des panneaux composites composés de plusieurs pièces, à savoir deux peaux et une âme centrale présentant une structure à âme alvéolaire du type nid d'abeille prise en sandwich entre les deux peaux. Ces panneaux composites offrent un gain de poids et une résistance améliorée.

Toutefois, leur fabrication est délicate du fait des contraintes structurelles, thermiques voire même acoustiques auxquelles ces panneaux composites doivent répondre.

L'invention décrite ci-après est particulièrement avantageuse dans le cadre de la fabrication de ces panneaux composites, destinées à équiper une nacelle.

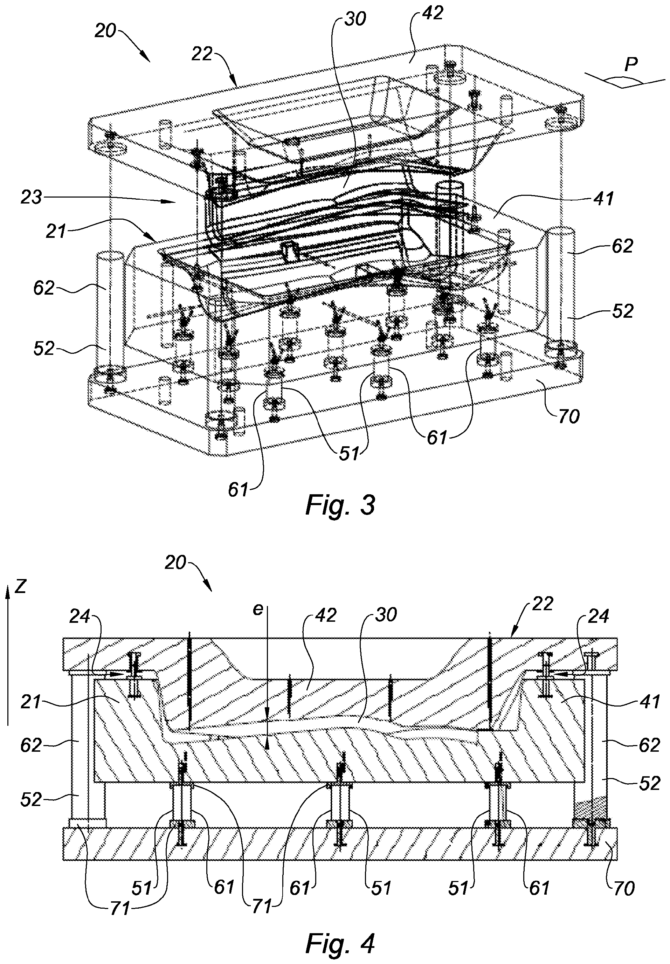

Les figures 3 et 4 illustrent un outillage 20 pour le brasage d'un ensemble 30 de pièces métalliques tel qu'un panneau composite. Cet outillage est destiné à être placé dans une enceinte d'un four à braser (non représenté sur ces deux figures).

L'outillage 20 comprend ici un premier élément 21 de moule et un deuxième élément 22 de moule adaptés pour enserrer ensemble, à la température de brasage, l'ensemble de pièces 30.

Les premier et deuxième éléments 21, 22 de moule comprennent chacun un moyen d'appui 41, 42 formant moule contre lequel l'ensemble 30 de pièces est placé sous contraintes à ladite température de brasage. Ce sont des surfaces de contact de ces moyens d'appui 41, 42 qui vont former une interface avec l'ensemble de pièces à braser et exercer les contraintes lors du brasage.

L'ensemble de pièces à braser est ici un des panneaux destinés à former l'îlot 12H ou 6h 14, 15 d'un IFS 8 d'une nacelle 1. Ce panneau est un panneau composite présentant une structure sandwich formée par une âme centrale présentant une structure à âme alvéolaire du type nid d'abeille, laquelle est prise en sandwich entre deux peaux. La structure à âme alvéolaire et les peaux sont chacune en titane.

Lors du brasage, les moyens d'appuis 41, 42 des premier et deuxième éléments 21, 22 de moule viennent chacun en opposition contre chacune des peaux en titane de panneau composite et enserrer l'ensemble 30 de ces pièces, à savoir les peaux contres lesquelles les moyens d'appuis 41, 42 viennent en contact et en appui durant le brasage, et l'âme située entre les peaux.

Les premier et deuxième éléments 21, 22 de moule comprennent respectivement un premier matériau 51 et un deuxième matériau 52 :
- le premier matériau 51 présentant un coefficient de dilatation supérieur à celui du matériau de l'ensemble 30 de pièces, c'est-à-dire ici du titane ; et
- le deuxième matériau 52 présentant un coefficient de dilatation inférieur à celui du titane formant le panneau composite 30 ;
les premier et deuxième matériaux 51, 52 étant adaptés pour que leur dilatation, au moins à la température de brasage, assure la mise sous contrainte de l'ensemble 30 de pièce entre les moyens d'appui 41, 42 des premier et deuxième éléments 21, 22 de moule.

En d'autres termes, la mise sous contrainte du panneau composite 30 exercée par les moyens d'appui 41, 42 des premier et deuxième éléments 21, 22 de moule est assurée par la dilatation des premier et deuxième matériaux 51, 52 elle-même lors de l'augmentation de la température dans le four à braser, ceci jusqu'à la température de brasage. Le moyen d'appui 41 du premier élément 21 de moule est maintenu par des premiers tirants 61 formé du premier matériau 51 et le moyen d'appui 52 du deuxième élément 22 de moule est maintenu par des deuxièmes tirants 62 formés du deuxième matériau 52.

En particulier chacun des premiers et deuxièmes tirants 61, 62 sont disposés sensiblement selon un axe vertical Z, c'est-à-dire perpendiculairement à un plan du sol sur lequel l'outillage 20 repose, et solidarisés, d'une part, au niveau d'une extrémité inférieure à un socle 70 commun et, d'autre part, au niveau d'une extrémité supérieure, au moyen d'appui 41, 42 associé.

En d'autres termes l'outillage 20 comprend :
- un socle 70 reposant sur le sol s'étendant horizontalement ;
- le premier élément 21 de moule comprenant un moyen d'appui 41 s'étendant globalement horizontalement, c'est-à-dire globalement dans un plan P parallèle au plan du sol, et fixé au socle par neuf premiers tirants 61 dressés verticalement ; et
- le deuxième élément 22 de moule comprenant un moyen d'appui 42 s'étendant globalement horizontalement et fixé au socle par quatre deuxièmes tirants 62 dressés verticalement ;
le deuxième élément 22 de moule délimitant avec le socle 70 un espace intérieur 23 à l'intérieur duquel est placé le premier élément 21 de moule.

Le deuxième matériau 52 des deuxièmes tirants est ici du molybdène présentant un coefficient de dilatation sensiblement égal à 5.10⁻⁶ K⁻¹.

Le moyen d'appui 41 du premier élément 21 de moule est supporté quant à lui par les premiers tirants 61 formés par le premier matériau 51, ici de l'inox réfractaire de coefficient de dilatation sensiblement égal à 19.10⁻⁶ K⁻¹, c'est-à-dire se dilatant quatre fois plus que le molybdène.

Les premiers tirants 61 forment des barres de dilatation et les deuxièmes tirants forment des barres de contention.

Ainsi, sous l'effet de la température à l'intérieur de l'enceinte d'un four à braser, le moyen d'appui 41 du premier élément 21 de moule, qui est situé sous l'ensemble de pièces 30 qu'il supporte, s'élève au fur et à mesure que la température augmente et vient plaquer les pièces à braser contre le moyen d'appui 42 du deuxième élément 22 de moule situé au dessus dudit l'ensemble de pièces 30, les moyens d'appui 41, 42 des premier et deuxième éléments 21, 22 de moule enserrant ainsi le panneau 30 composite.

Une fois le brasage effectué et lorsque la température diminue, le moyen d'appui 41 du premier élément 21 de moule s'abaisse au fur et à mesure que la température diminue, en particulier par rapport au moyen d'appui 42 du deuxième élément du fait de la différence de coefficient de dilatation, et libère ledit panneau 30 composite du moyen d'appui 42 du deuxième élément 22 de moule contre lequel ledit panneau composite 30 est sous contraintes lors du brasage. Le panneau 30 composite peut donc refroidir et se rétracter librement sans être enserré, c'est-à-dire sans subir les contraintes exercées par les moyens d'appui sur ledit panneau 30 composite lors du brasage.

Cette configuration forme donc un « ascenseur thermique » dont la température dans l'enceinte du four à braser fait évoluer un écartement e entre les premier et deuxième moyens d'appui 41, 42 des premier et deuxième éléments 21, 22 de moule ce qui assure la mise sous contrainte du panneau composite 30 par ces dits moyens d'appui 41, 42.

La variation de cet écartement est permis du fait que les hauteurs respectives des moyens d'appui 41, 42 des premier et deuxième éléments 21, 22 évoluent de manière différente et contrôlée puisque le premier élément 21 de moule est situé dans l'espace intérieur 23 délimité par le deuxième élément 22 de moule avec le socle 70, le moyen d'appui 41 du premier élément 21 de moule étant situé sous l'élément d'appui 42 du deuxième élément 22 de moule par rapport à la verticale, et puisque :
- l'inox 51 des premiers tirants 61 présentant un coefficient de dilatation supérieur à celui du titane du panneau composite 30 ; et
- le molybdène 52 des deuxièmes tirants 62 présente un coefficient de dilatation inférieur à celui du titane.

Des butées 24 peuvent être placées entre les moyens d'appui 41, 42 des premier et deuxième éléments 21, 22 de moule de sorte à éviter un écrasement trop important du panneau composite 30. Dans ce cas, ces butées anti-écrasement seront placées sur une zone périphérique des moyens d'appui 41, 42 et en dehors ou au-delà de la zone de contact et d'appui où les contraintes sont exercées sur le panneau composite (voir figure 4). Avantageusement, comme c'est le cas dans le mode de réalisation, les butées comprennent au moins un moyen de centrage permettant de centrer la position des moyens d'appui 41, 42 l'un par rapport à l'autre. Ce moyen de centrage peut être formé, par exemple, par des saillies de forme conique agencées pour pénétrer dans des orifices adaptés.

La fixation des tirants avec le moyen d'appui associé et le socle 70 est réalisée par des vis situées dans le prolongement longitudinal du tirant au niveau de l'extrémité inférieure. En particulier les tirants 61, 62 sont vissés sur des bols 71 eux-mêmes scellés dans le béton réfractaire du socle 70. Des bols 71 sont également positionnés au niveau de leur extrémité supérieure, les moyens d'appui 41, 42 des premier et deuxième éléments 21, 22 de moule reposant sur lesdits bols 71 portés par les tirants 61, 62. Bien que les moyens d'appui 41, 42 soient posés sur les tirants 61, 62, la masse du moyen d'appui 42 du deuxième élément 22 suffit à exercer, lors du brasage, la pression nécessaire.

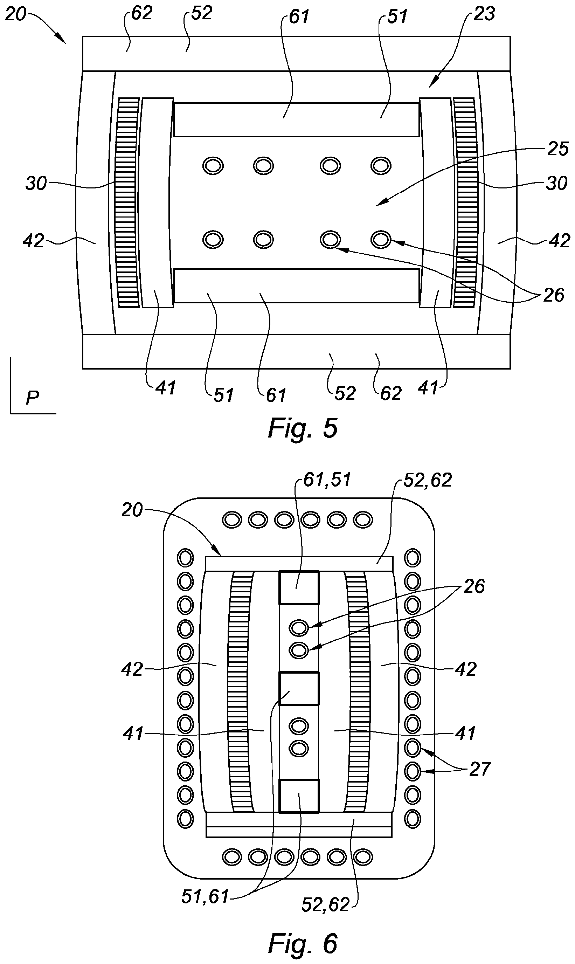

La figure 5 illustre de façon schématique un outillage 20 pour le brasage d'un ensemble 30 de pièces métalliques tel qu'un panneau composite selon un mode de réalisation de l'invention.

Ce mode de réalisation diffère essentiellement du premier mode de réalisation illustré sur les figures 3 et 4 en ce que qu'il comprend :
- un premier élément 21 de moule comprenant deux moyens d'appui 41 fixés chacun à des extrémités opposées des premiers tirants 61 associés ; et
- un deuxième élément 22 de moule comprenant deux moyens d'appui 42 fixés chacun à des extrémités opposées des deuxièmes tirants 62 associés,
le deuxième élément 22 de moule délimitant, avec ses moyens d'appui 42 et ses deuxièmes tirants 61, un espace intérieur 23 à l'intérieur duquel est placé le premier élément 21 de moule, de sorte que chacun des moyens d'appui 41 du premier élément 21 de moule se trouve en regard avec l'un des moyens d'appui du deuxième élément de moule.

Une telle configuration permet notamment de pouvoir mettre en oeuvre le brasage de deux ensembles 30 de pièces en même temps avec un même outillage 20 et dans la même enceinte du four, ceci sans augmenter le temps de chauffe et de refroidissement du brasage. Dans le mode selon l'invention, les premiers et deuxièmes moyens d'appui 41, 42 sont disposés globalement verticalement, c'est-à-dire perpendiculaire au plan du sol, de sorte à ce que l'ensemble de pièces 30 métalliques soit enserré, à la température de brasage, verticalement. Les premiers et deuxièmes tirants 61, 62 sont alors disposés dans un plan P parallèle au plan horizontal.

Le premier matériau 51 est ici de l'inox et le deuxième matériau 52 est du molybène, ces matériaux constituant les premiers et deuxièmes tirants 61, 62 respectivement.

Les contraintes exercées par les moyens d'appui 41, 42 sont limitées de manière significative puisque l'action du poids du panneau composite 30 sur les moyens d'appui est limitée, voire supprimée.

En effet, dans le cas contraire où les premier et deuxième moyens d'appui 41, 42 sont disposés horizontalement, comme illustré sur les figures 3 et 4, de sorte à ce que le panneau composite 30 soit enserré, à la température de brasage, horizontalement, la force de gravité exercée par le panneau composite 30 sur le moyen d'appui 41 (voir figure 4) qui le supporte implique une contrainte s'exerçant sur une surface importante du panneau 30 composite délimitée par sa peau associée et qui est à l'origine de frottements entre l'outillage 20 et ledit panneau composite 30 lors du refroidissement.

Avec une orientation verticale, les moyens d'appui 41, 42 ne supportent pas en tant que tel le panneau composite. Par ailleurs, dans une telle configuration le panneau composite, alors dressé verticalement, reposerait sur un support contre sa tranche délimitant une épaisseur du panneau composite 30, cette épaisseur étant de dimension très faible par rapport aux autres dimensions du panneau composite. Il en résulte que les frottements subis par le panneau composite 30 sont réduits de manière significative.

Par ailleurs, le premier élément 21 de moule délimite, en particulier ici mais de façon non limitative, avec ses moyens d'appui 41 et ses tirants 61, un autre espace intérieur 25.

L'utilisation d'un ou plusieurs matériau(x) métallique(s) pour former ledit premier élément 21 de moule, en l'espèce le molybdène, et la présence d'un espace intérieur 25, permet d'installer un réseau de résistances interne 26 de façon à assurer, avec un autre réseau de résistances externe 27 porté par le four (voir figure 6) une meilleur homogénéité de la température par rapport aux panneaux composites 30 lors du brasage.

Dans ces configurations, les deux moyens d'appui 41 internes (car situés dans l'espace intérieur 23) sont poussés par les premiers tirants 61 ou barres de dilatation en inox réfractaire 51 assurant le conformage et l'accostage des deux panneaux composite 30 sur les deux moyens d'appui 42 externes maintenus par les deuxièmes tirants 62 en molybdène 52 se dilatant peu pendant la durée de brasage à environ 1000°C. Alternativement, le molybdène peut être remplacé par du carbone/carbone.

Lors du refroidissement les deux moyens d'appui 41 internes se rétractent via les premiers tirants 61 ou barres de dilatation en inox réfractaire 51 sur lesquelles ils sont rattachés et libèrent les panneaux composites brasés de leurs contraintes.

La fixation des tirants avec les moyens d'appui associés est réalisée par des vis situées dans le prolongement longitudinal du tirant au niveau de chacune de ses deux extrémités, inférieure et supérieure.

Les différents matériaux pouvant comporter des écarts de dilatation importants et les dimensions des pièces constituées de ces matériaux pouvant être relativement grandes, la fixation des tirants avec les moyens d'appui associés peut être réalisée par des logements adaptés pour accepter les dilatations respectives.

La figure 6 illustre de façon schématique un outillage 20 pour le brasage d'un ensemble 30 de pièces métalliques tel qu'un panneau composite selon un autre mode de réalisation de l'invention. Cet autre mode de réalisation peut être combiné avec le deuxième mode de réalisation illustré figure 5.

Dans cet autre mode de réalisation, à la différence du deuxième mode de réalisation, les deuxièmes tirants 62 du deuxième élément 22 de moule formés par le deuxième matériau 52 ainsi que les moyens d'appuis 41, 42 des premier et deuxième éléments 21, 22 de moule sont en carbone/carbone de coefficient de dilatation sensiblement égal à 2.10⁻⁶ K⁻¹.

Les premiers tirants 61 sont constitués du premier matériau 51, ici de l'inox de coefficient de dilatation sensiblement égal à 19.10⁻⁶ K⁻¹, c'est-à-dire se dilatant près de quatre fois plus que le molybdène.

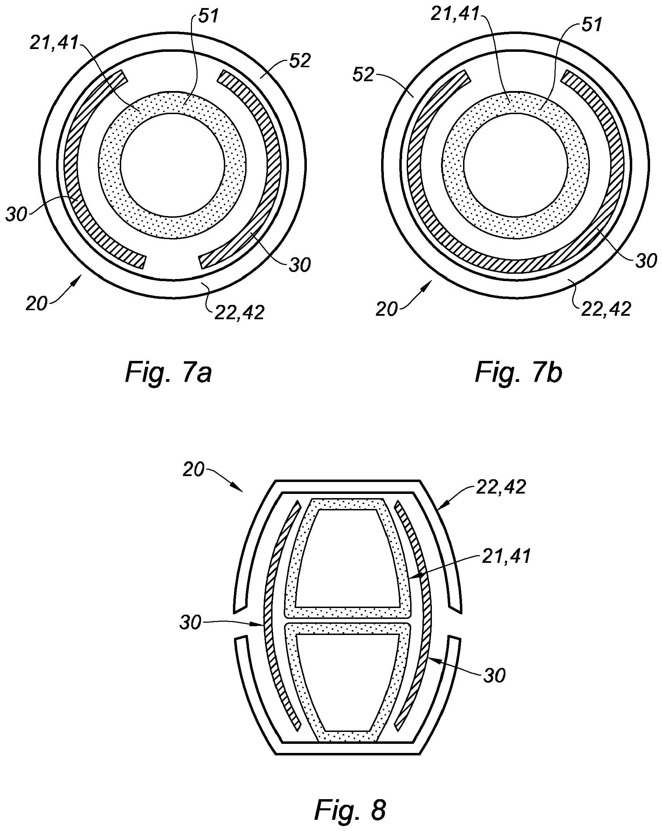

Les figures 7a et 7b illustrent de façon schématique un outillage pour le brasage d'un ensemble de pièces métalliques tel qu'un panneau composite 30. Les moyens d'appui 41, 42 des premier et deuxième éléments 21, 22 de moule présentent chacune une section sensiblement circulaire, d'axe de révolution vertical et sont constitués au moins en partie du premier et du deuxième matériau 51, 52, respectivement.

Le moyen d'appui 41 du premier élément 21 de moule présente une section de contour fermé formant une couronne intérieure et le moyen d'appui 42 du deuxième élément 22 de moule présente une section de contour fermé formant une couronne extérieure. Les figures 7a et 7b illustrent des vues en coupe transversale, dans un plan parallèle au plan du sol.

En d'autres termes, le deuxième moyen d'appui 42, de section sensiblement circulaire délimite un espace intérieur 23 à l'intérieur duquel est placé le moyen premier d'appui 41. Une telle configuration permet de s'affranchir de l'utilisation de tirants et de braser des panneaux 30 composites présentant un axe de révolution, ici vertical. Ces panneaux composites 30 peuvent être par exemple cylindriques, coniques, tronconiques, etc.

De façon générale, l'espace intérieur 23 est agencé pour recevoir un ou plusieurs panneau(x) composite présentant une section en arc de cercle s'étendant selon un secteur angulaire plus ou moins important. Par exemple, la figure 7a illustre un espace intérieur 23 à l'intérieur duquel est placé deux panneaux composite présentant chacun une section en forme d'arc de cercle et s'étendant chacun selon un secteur angulaire inférieur à 180°. La figure 7b illustre un espace intérieur 23 à l'intérieur duquel est placé un panneau composite présentant une section en forme d'arc de cercle et s'étendant selon un secteur angulaire supérieur à 270° et strictement inférieur à 360°.

Par exemple, le panneau 30 composite peut être destiné à former un module interne 12 de la tuyère d'éjection 10 de la nacelle 1, comme illustré sur la figure 1, ou encore destiné à former un tonneau 13 d'un IFS 8 en titane.

Du fait de l'absence de tirants, les moyens d'appuis 41, 42 forment, au moins en partie, les premier et deuxième éléments 21, 22 de moule, et sont respectivement formés par le premier matériau 51 et le deuxième matériau 52.

L'ensemble de pièces à braser 30 est intercalé entre les premier et deuxième éléments 21, 22 et, de la même façon que les autres modes de réalisations :
- le premier matériau 51 présente un coefficient de dilatation supérieur à celui du matériau de l'ensemble 30 de pièces, c'est-à-dire ici du titane ; et
- le deuxième matériau 52 présente un coefficient de dilatation inférieur à celui du titane formant le panneau composite 30.
les premier et deuxième matériaux 51, 52 étant adaptés pour que leur dilatation, au moins à la température de brasage, assure la mise sous contrainte de l'ensemble 30 de pièce entre les moyens d'appui 41, 42 des premier et deuxième éléments 21, 22 de moule.

La figure 8 illustre un outillage pour le brasage d'un ensemble de pièces métalliques tel qu'un panneau composite. La figure 8 illustre une vue en coupe longitudinale, dans un plan vertical, perpendiculaire au plan du sol.

Dans ce mode de réalisation, complémentaire ici à celui illustré figures 7a et 7b, l'outillage 20 peut s'ouvrir en deux parties de sorte à faciliter le retrait de la pièce, notamment lorsque le panneau 30 composite est destiné à former un tonneau 13.

Plus précisément, dans ce mode de réalisation, les moyens d'appui 41, 42 des premier et deuxième éléments 21, 22 de moule comportent chacun une partie inférieure et une partie supérieure, présentant chacune une forme de demi-tonneau et placées en vis-à-vis. La parties supérieures sont ici posées sur les parties inférieures des premier et deuxième éléments 21, 22 respectivement.

Afin d'assurer l'ancrage de la partie supérieure sur la partie inférieure associée, un moyen d'ancrage (non représenté) peut être prévu tel qu'une lèvre circulaire sur un bord de la partie inférieure agencée pour coopérer dans une gorge circulaire sur un bord de la partie supérieure, ou inversement.

Par ailleurs, des cerclages de renfort peuvent être utilisés en compléments pour renforcer la tenue mécanique des premier et deuxième éléments 21, 22.

L'invention est décrite dans ce qui précède à titre d'exemple. Il est entendu que l'homme du métier est à même de réaliser différentes variantes de réalisation de l'invention sans pour autant sortir du cadre de l'invention telle que définie dans les revendications jointes. Par exemple, les premier et deuxième moyens d'appui 41, 42 peuvent être disposés globalement verticalement de sorte à ce que l'ensemble de pièces métalliques soit enserré, à la température de brasage, verticalement même si les premier et deuxième éléments présentent chacun un seul moyen d'appui 41, 42.

L'outillage peut également être utilisée ou associée en combinaison avec des moyens de pression mécanique pour appliquer une pression supplémentaire sur les éléments à braser, lors du brasage.

Les premier et deuxième matériaux sont choisis de sorte à ce qu'ils respectent la condition donnée par leur coefficient de dilatation respectif par rapport à celui de l'ensemble 30 de pièces à braser. Les matériaux cités peuvent donc varier en fonction desdits coefficients de dilatation. De préférence, ces premier et deuxième matériaux sont métalliques.

Par ailleurs les premier et deuxième matériaux 51, 52 peuvent comprendre une combinaison de matériaux, de sorte que cet alliage présente un coefficient de dilatation approprié.

Par ailleurs, lorsque des tirants sont utilisés, comme illustré sur les figures 3, 4, 5 et 6) ceux-ci peuvent être formés intégralement ou au moins en partie par le premier ou deuxième matériau. Cette configuration permet de déterminer plus facilement l'écartement entre les moyens d'appui 41, 42 des premier et deuxième éléments 21, 22 de moule compte tenu des dimensions de l'outillage et de l'écartement souhaité, c'est-à-dire des contraintes à déterminer, à la température de brasage.

## Revendications

1. Outillage (20) adapté pour le brasage d'un ensemble (30) de pièces métalliques, notamment d'un panneau composite, dans une enceinte d'un four à braser, l'outillage (20) comprenant au moins un premier élément (21) de moule et un deuxième élément (22) de moule adaptés pour enserrer ensemble, à la température de brasage, l'ensemble de pièces (30), les premier et deuxième éléments (21, 22) de moule comprenant au moins un moyen d'appui (41, 42) formant moule contre lequel l'ensemble (30) de pièces est placé sous contraintes à ladite température de brasage, le premier et le deuxième éléments (21, 22) de moule comprenant respectivement un premier matériau (51) et un deuxième matériau (52) :
- le premier matériau (51) présentant un coefficient de dilatation supérieur à celui du matériau de l'ensemble (30) de pièces ; et
- le deuxième matériau (52) présentant un coefficient de dilatation inférieur à celui du matériau de l'ensemble (30) de pièces ;
les premier et deuxième matériaux (51, 52) étant adaptés pour que leur dilatation, au moins à la température de brasage, assure la mise sous contrainte de l'ensemble (30) de pièce entre les moyens d'appui (41, 42) des premier et deuxième éléments (21, 22) de moule, l'outillage (20) étant **caractérisé en ce que en ce que** le moyen d'appui (41) du premier élément (21) de moule est maintenu par des premiers tirants (61) formés par le premier matériau (51) et le moyen d'appui (52) du deuxième élément (22) de moule est maintenu par des deuxièmes tirants (62) formés par le deuxième matériau (52), **en ce que** le premier élément (21) de moule comprend deux moyens d'appui (41) fixés chacun à des extrémités opposées des premiers tirants (61) associés et le deuxième élément (22) de moule comprend deux moyens d'appui (42) fixés chacun à des extrémités opposées des deuxièmes tirants (62) associés, le deuxième élément (22) de moule délimitant un espace intérieur (23) à l'intérieur duquel est placé le premier élément (21) de moule de sorte que chacun des moyens d'appui (41) du premier élément (21) de moule est en regard avec un des moyens d'appui du deuxième élément de moule, et **en ce que** les premier et deuxième moyens d'appui (41, 42) sont disposés verticalement de sorte à ce que l'ensemble de pièces métalliques soit enserré, à la température de brasage, verticalement.

2. Outillage (20) selon la revendication 1, **caractérisé en ce qu'**un écartement entre les moyens d'appui (41, 42) des premier et deuxième éléments (21, 22) de moule est choisi de sorte à présenter un écartement déterminé ou une contrainte déterminée à température de brasage.

3. Outillage (20) selon la revendication 1 ou 2, **caractérisé en ce que** le moyen d'appui (41, 42) est en carbone/carbone ou en inox réfractaire ou en graphite.

4. Outillage (20) selon l'une quelconque des revendications précédentes, **caractérisé en ce que** le premier matériau (51) est de l'inox réfractaire.

5. Outillage (20) selon l'une quelconque des revendications précédentes, **caractérisé en ce que** le deuxième matériau (52) est en molybdène ou en carbone/carbone.

6. Outillage (20) selon l'une quelconque des revendications précédentes, **caractérisé en ce que** l'ensemble de pièces (30) est un panneau composite, notamment un panneau d'atténuation acoustique.

## Patentansprüche

1. Werkzeug (20), das zum Löten eines Satzes (30) von Metallteilen, insbesondere einer Verbundplatte, in einer Kammer eines Lötofens angepasst ist, wobei das Werkzeug (20) mindestens ein erstes Formelement (21) und ein zweites Formelement (22) umfasst, die dafür angepasst sind, den Teilesatz (30) bei der Löttemperatur zusammenzuspannen, wobei das erste und zweite Formelement (21, 22) mindestens ein Stützmittel (41, 42) umfassen, welches eine Form bildet, gegen die der Teilesatz (30) bei der Löttemperatur unter Spannungen platziert wird, wobei das erste und das zweite Formelement (21, 22) jeweils ein erstes Material (51) und ein zweites Material (52) umfassen:
- wobei das erste Material (51) einen Dehnungskoeffizienten aufweist, der höher ist als derjenige des Materials des Teilesatzes (30); und
- wobei das zweite Material (52) einen Dehnungskoeffizienten aufweist, der niedriger ist als derjenige des Materials des Teilesatzes (30);
wobei das erste und zweite Material (51, 52) so angepasst sind, dass ihre Dehnung, mindestens bei der Löttemperatur, das Verspannen des Teilesatzes (30) zwischen den Stützmitteln (41, 42) des ersten und zweiten Formelements (21, 22) sicherstellt, wobei das Werkzeug (20) **dadurch gekennzeichnet** ist, dadurch, dass das Stützmittel (41) des ersten Formelements (21) von ersten Zugstangen (61) gehalten wird, die aus dem ersten Material (51) gebildet sind, und das Stützmittel (52) des zweiten Formelements (22) von zweiten Zugstangen (62) gehalten wird, die aus dem zweiten Material (52) gebildet sind, dadurch, dass das erste Formelement (21) zwei Stützmittel (41) umfasst, die jedes an gegenüberliegenden Enden der zugehörigen ersten Zugstangen (61) befestigt sind, und das zweite Formelement (22) zwei Stützmittel (42) umfasst, die jedes an gegenüberliegenden Enden der zugehörigen zweiten Zugstangen (62) befestigt sind, wobei das zweite Formelement (22) einen Innenraum (23) begrenzt, in dessen Inneren das erste Formelement (21) so platziert ist, dass jedes der Stützmittel (41) des ersten Formelements (21) einem der Stützmittel des zweiten Formelements zugewandt ist, und dadurch, dass das erste und zweite Stützmittel (41, 42) vertikal so angeordnet sind, dass der Satz von Metallteilen bei der Löttemperatur vertikal eingespannt wird.

2. Werkzeug (20) nach Anspruch 1, **dadurch gekennzeichnet, dass** ein Abstand zwischen den Stützmitteln (41, 42) des ersten und zweiten Formelements (21, 22) so ausgewählt ist, dass er bei Löttemperatur einen bestimmten Abstand oder eine bestimmte Spannung aufweist.

3. Werkzeug (20) nach Anspruch 1 oder 2, **dadurch gekennzeichnet, dass** das Stützmittel (41, 42) aus Kohlenstoff/Kohlenstoff oder aus hitzebeständigem Edelstahl oder aus Graphit ist.

4. Werkzeug (20) nach einem der vorstehenden Ansprüche, **dadurch gekennzeichnet, dass** das erste Material (51) hitzebeständiger Edelstahl ist.

5. Werkzeug (20) nach einem der vorstehenden Ansprüche, **dadurch gekennzeichnet, dass** das zweite Material (52) aus Molybdän oder aus Kohlenstoff/Kohlenstoff ist.

6. Werkzeug (20) nach einem der vorstehenden Ansprüche, **dadurch gekennzeichnet, dass** der Teilesatz (30) eine Verbundplatte, insbesondere eine Schalldämmplatte ist.

## Claims

1. A tooling (20) adapted for brazing a set of metal parts (30), in particular a composite panel, in an enclosure of a brazing furnace, the tooling (20) comprising at least a first mold member (21) and a second mold member (22) adapted to clamp together, at the brazing temperature, all the parts (30), the first and second mold members (21, 22) comprising at least one bearing means (41, 42) forming a mold against which the set of parts (30) is placed under stresses at said brazing temperature, the first and second mold members (21, 22) comprising respectively a first material (51) and a second material (52):
- the first material (51) having a coefficient of expansion greater than that of the material of the set of parts (30); and
- the second material (52) having a coefficient of expansion less than that of the material of the set of parts (30);
the first and second materials (51, 52) being adapted so that their expansion, at least at the brazing temperature, ensures the stressing of the set of parts (30) between the bearing means (41, 42) of the first and second mold members (21, 22), the tooling (20) being **characterized in that** the bearing means (41) of the first mold member (21) is maintained by first tie rods (61) formed by the first material (51) and the bearing means (52) of the second mold member (22) is maintained by second tie rods (62) formed by the second material (52), **in that** the first mold member (21) comprises two bearing members (41) each fixed to opposite ends of the associated first tie rods (61) and the second mold member (22) comprises two bearing means (42) each fixed to opposite ends of the associated second tie rods (62), the second mold member (22) delimiting an inner space (23) inside which the first mold member (21) is placed so that each of the bearing means (41) of the first mold member (21) is facing one of the bearing means of the second mold member, and **in that** the first and second bearing means (41, 42) are disposed vertically so that the set of metal parts is clamped, at the brazing temperature, vertically.

2. The tooling (20) according to claim 1, **characterized in that** a spacing between the bearing means (41, 42) of the first and second mold members (21, 22) is chosen so as to have a determined spacing or a determined stress at brazing temperature.

3. The tooling (20) according to claim 1 or 2, **characterized in that** the bearing means (41, 42) is made of carbon/carbon or refractory stainless steel or graphite.

4. The tooling (20) according to any one of the preceding claims, **characterized in that** the first material (51) is refractory stainless steel.

5. The tooling (20) according to any one of the preceding claims, **characterized in that** the second material (52) is made of molybdenum or carbon/carbon.

6. The tooling (20) according to any one of the preceding claims, **characterized in that** the set of parts (30) is a composite panel, in particular an acoustic attenuation panel.
